# EUROPÄISCHE PATENTSCHRIFT

(11) **EP 2 807 199 B1**
(45) Veröffentlichungstag und Bekanntmachung des Hinweises auf die Patenterteilung: **26.10.2016**
(21) Anmeldenummer: 13700223.4
(22) Anmeldetag: 14.01.2013
(51) Int. Cl.: C08G 18/00, C08G 65/00, C08J 9/00, C08G 63/00

(54) **POLYETHERESTER-POLYOLE UND VERFAHREN ZU DEREN HERSTELLUNG**
POLYETHER-ESTER POLYOLS AND METHOD FOR PRODUCING SAME
POLYÉTHERESTER-POLYOLS ET PROCÉDÉ DE PRÉPARATION

(30) Priorität: 23.01.2012 EP 12152140
(43) Veröffentlichungstag der Anmeldung: 03.12.2014
(73) Patentinhaber: BASF SE, 67056 Ludwigshafen am Rhein (DE); BASF Schweiz AG, 4057 Basel (CH)
(72) Erfinder: KUNST, Andreas, 67063 Ludwigshafen (DE); ELING, Berend, 49448 Lemförde (DE); KÖNIG, Christian, 68165 Mannheim (DE)
(74) Vertreter: BASF IP Association
(86) Internationale Anmeldenummer: PCT/EP2013/050532
(87) Internationale Veröffentlichungsnummer: WO 2013/110512

(56) Entgegenhaltungen:
- EP-A1- 1 923 417
- WO-A1-2012/062683
- DE-A1- 19 812 174
- US-A1- 2009 234 037
- DATABASE WPI Week 197031 Thomson Scientific, London, GB; AN 1970-55706R XP002681567, -& JP S45 22347 B1 (NIPPON OILS & FATS CO LTD) 28. Juli 1970 (1970-07-28)

## Beschreibung

Die vorliegende Erfindung betrifft neuartige Polyetherester-Polyole sowie ein Verfahren zu deren Herstellung.

Als Polyetherester-Polyole werden solche Polyol-Typen bezeichnet, bei denen sowohl Polyether-Einheiten als auch Polyestereinheiten in einer Molekülkette vorhanden sind. Sie werden unter anderem als Rohstoff für die Herstellung von Polyurethan-Materialien verwendet. Grundsätzlich sind verschiedene Verfahren bekannt, Polyetherester-Polyolen zu erhalten. Im Folgenden seien einige relevante Dokumente zitiert:
US 6 753 402 beschreibt die katalytische Anlagerung von Alkylenoxiden an Polyester unter Verwendung von DMC-Katalysatoren.
US 5 319 006, US 5 436 313 sowie US 5 696 225 beschreiben die Polykondensation von Polyethern mit Dicarbonsäuren oder Dicarbonsäureanhydriden unter Verwendung von Polykondensationskatalysatoren.
US 6 569 352 beschreibt ein zweistufiges Verfahren, bei dem zunächst Polyole mit zyklischen Anhydriden zur Reaktion gebracht werden und in einem weiteren Schritt die Anlagerung der Alkylenoxide erfolgt.

In den Dokumenten US 20070265367, US 5 032 671 sowie im Journal of Applied Polymer Science, Jahrgang 2007, Ausgabe 103, Seite 417-424 wird die direkte Copolymerisation von zyklischen Anhydriden bzw. zyklischen Estern mit Alkylenoxid und Alkoholen als Initiatoren beschrieben.

US 20060211830 beschreibt ein zweistufiges Verfahren, bei dem zunächst ein hydroxygruppenhaltiger Carbonsäureester mit Alkylenoxid zur Reaktion gebracht wird. Das Reaktionssprodukt wird anschließend in Gegenwart eines Umesterungskatalysators kondensiert.

EP 1 923 417 B1 beschreibt die Umsetzung H-funktioneller Verbindungen mit Alkylenoxiden in Gegenwart von Fettsäureestern unter zur Hilfenahme von basischen Katalysatoren. Hierbei wird im Prozess simultan alkoxiliert und umgeestert, so dass angeblich homogene Polyetherester resultieren.

Auch wenn die Verwendung von Fettsäureestern oder Carbonsäuren oder Carbonsäureestern oder Carbonsäureanhydride als Rohstoff für die Herstellung von Polyetherester-Polyolen in den oben zitierten Dokumenten beschrieben wurde, beschreibt jedoch keines der Dokumente, dass sich im Falle der basenkatalysierten Ringöffnungspolymerisation von Alkylenoxiden neben Fettsäureestern weitere ester- oder säureanhydrid-funktionelle Moleküle einsetzen lassen. Dies jedoch ermöglicht den Zugang zu neuartigen Polyetherester-Strukturen, die durch die Wahl der funktionellen Moleküle noch weiter modifiziert und an die jeweiligen Anwendungsgebiete beispielsweise im Polyurethan angepasst werden können.

Bei zahlreichen Anwendungen, zum Beispiel bei Polyurethanen, die aus Polyolen, wie Polyetheresterpolyolen, hergestellt werden können, sind hydrophobe Eigenschaften erwünscht. Diese führen in der Regel zu einer verringerten Wasseraufnahme und einer verbesserten Hydrolysebeständigkeit, also zu einem verbesserten Alterungsverhalten des Polyurethans. Zudem können hydrophob modifizierte Polyurethane eine veränderte Oberflächenstruktur aufweisen, was sich z. B. in einer verbesserten Rutschfestigkeit oder in einem angenehmeren Gefühl beim Anfassen (verbesserte Haptik) äußern kann. Ein klarer Vorteil bietet eine verringerte Wasseraufnahme in Beschichtungen, Klebstoffen, Dichtungen und Elastomeren (im Allgemeinen bei "CASE"-Anwendungen - Coatings, Adhesives, Sealants, Elastomers-Anwendungen). In diesen Anwendungen wird oft die maximale Wasseraufnahme des Polyurethans unter bestimmten Testbedingungen festgelegt, denn es ist bekannt, dass Polyurethane mit einer geringeren Wasseraufnahme in diesen Anwendungen meist verbesserte Eigenschaften aufweisen. In mit Kohlenwasserstoffen getriebenen Polyurethan-Hartschaum-Formulierungen sind hydrophobe Polyole erwünscht, da diese die Verträglichkeit zwischen der Polyolkomponente, dem Treibmittel sowie der Isocyanatkomponente verbessern, wodurch auch bei einem vergleichsweise hohen Anteil an aliphatischen oder zykloaliphatischen Treibmitteln (n-Pentan oder Cyclopentan) homogene Polyolkomponenten resultiert.

Die bisher vorhandene Literatur auf dem Gebiet der Herstellung von Polyetheresterpolyolen, wie sie zum Beispiel in den oben genannten Dokumenten verkörpert ist, bietet jedoch bisher keine befriedigende Lösung des Problems, wie Polyetheresterpolyole mit hydrophoben Eigenschaften für einen breiten Anwendungsbereich hergestellt werden können. Zudem benötigen die bisher bekannten Verfahren zur Herstellung von Polyether-Esterpolyolen in der Regel einen hohen Energieeintrag und sind oft sehr aufwendig, z. B. weil bei der Reaktion entstehendes Wasser abgeführt werden muss (Stripping).

Es stellte sich also die Aufgabe, ein einfach durchzuführendes, möglichst energieeffizientes Verfahren zur Herstellung von Polyetherester-Polyolen mit hydrophoben Eigenschaften für einen breiten Anwendungsbereich bereitzustellen. Das Verfahren sollte dabei möglichst einheitliche und homogene Polyetherester-Polyole liefern, die für Polyurethan (PU)-Anwendungen geeignet sein sollten. Es sollte möglich sein, preisgünstige Rohstoffe einzusetzen.

Gegenstand der Erfindung ist somit ein Verfahren zur Herstellung eines Polyetherester-Polyols, wobei ein Gemisch (A) aus mindestens einer Zerewitinoff-aktiven Verbindung i), mindestens einer Verbindung ii), ausgewählt aus der Gruppe enthaltend zyklische Anhydride von Dicarbonsäuren, mindestens einem Fettsäureester iiib) sowie optional mindestens einer Verbindung iv), ausgewählt aus der Gruppe enthaltend zyklische Mono- und Diester, mit Hilfe eines nucleophilen und/ oder basischen Katalysators mit mindestens einem Alkylenoxid v) zur Reaktion gebracht wird, wobei die mindestens eine Zerewitinoff-aktive Verbindung i) ausgewählt ist aus der Gruppe der hydroxy- und/oder aminofunktionellen Verbindungen mit einer Funktionalität im Bereich zwischen 1 und 8, und wobei der Fettsäureester iiib) ausgewählt ist aus der Gruppe enthaltend Fettsäureester, die keine Hydroxylgruppen enthalten, und Mischungen daraus, wobei der nucleophile und/oder basische Katalysator ausgewählt ist aus der Gruppe enthaltend tertiäre Amine.

Weitere Gegenstände der vorliegenden Erfindung sind auch ein Polyetherester-Polyol, herstellbar nach dem erfindungsgemäßen Verfahren, sowie die Verwendung eines nach dem erfindungsgemäßen Verfahren herstellbaren Polyetherester-Polyols zur Herstellung von geschäumten und/ oder kompakten Polyurethanen durch Reaktion mit einem Di- oder Polyisocyanat, sowie die Verwendung eines nach dem erfindungsgemäßen Verfahren herstellbaren Polyetherester-Polyols zur Herstellung von Polyisocyanurat-Schäumen, und die Verwendung eines nach dem erfindungsgemäßen Verfahren herstellbaren Polyetherester-Polyols zur Herstellung von kompakten Polyurethanen aus dem Bereich Beschichtungen oder Klebstoffe.

In einer bevorzugten Ausführungsform der Erfindung wird das Gemisch (A) zusammen mit dem nucleophilen und/ oder basischen Katalysator vor Zugabe des mindestens einen Alkylenoxids iv) im Reaktionsgefäß vorgelegt.

Die Zerewitinoff-aktive Verbindung i) ist ausgewählt aus der Gruppe der hydroxy- und/oder aminofunktionellen Verbindungen mit einer Funktionalität im Bereich zwischen 1 und 8.

Die Zerewitinoff-aktive Verbindung i) ist in einer bevorzugten Ausführungsform ausgewählt aus der Gruppe der üblicherweise verwendeten Polyalkohole oder Mono- sowie Polyamine mit Funktionalitäten im Bereich zwischen 2 bis 8 bzw. deren Umsetzungsprodukten mit Alkylenoxiden wie Propylenoxid oder Ethylenoxid sowie Mischungen hieraus. Beispielhaft erwähnt seien an dieser Stelle Wasser, Propylenglykol, Ethylenglykol, Diethylenglykol, Dipropylenglykol, Neopentylglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythritol, Sorbitol, Saccharose, Hydrochinon, Pyrocatechol, Resorcinol, Bisphenol A, Bisphenol F, 1,3,5-Trihydroxybenzol, Kondensationsprodukte von Formaldehyd mit Phenol oder Melamin oder Harnstoff, die Methylolgruppen tragen, Harnstoff, Biuret, Mannichbasen, Stärke oder Stärkederivate, Ammoniak, Ethanolamin, Diethanolamin, Triethanolamin, Isopropanolamin, Diisopropanolamin, Triisopropanolamin, Ethylendiamin, Hexamethylendiamin, Anilin, alle Isomere von Diaminobenzol, Diaminotoluol sowie Diaminodiphenylmethan.

Bevorzugt ist die Zerewitinoff-aktive Verbindung ausgewählt aus der Gruppe enthaltend Glycerin, Propylenglykol, Dipropylenglykol, Ethylenglykol, Diethylenglykol, Neopentylglykol, Trimethylolpropan, Saccharose, Sorbitol, Pentaerythritol und Bisphenol A, sowie Mischungen daraus. In einer Ausführungsform des erfindungsgemäßen Verfahrens ist das zyklische Anhydrid ii) einer Dicarbonsäure ausgewählt aus der Gruppe enthaltend a) Alkenylbernsteinsäureanhydride, b) Phthalsäureanhydrid, c) Maleinsäureanhydrid, d) Bernsteinsäureanhydrid sowie e) Tetrahydrophthalsäureanhydrid und Mischungen daraus.

Die Alkenylbernsteinsäureanhydride a) sind dabei bevorzugt ausgewählt aus der Gruppe der C12-C20-alkylkettensubstituierten Bernsteinsäureanhydride und der Poly(isobutylen)bernsteinsäureanhydride mit Molekulargewicht zwischen 500 und 2000 g/mol. Das mindestens eine Alkenylbernsteinsäureanhydrid a) ist in einer Ausführungsform des erfindungsgemäßen Verfahrens bevorzugt ausgewählt aus der Gruppe enthaltend C18- und/oder C16-Alkenylbernsteinsäureanhydride, Poly(isobutylen)bernsteinsäureanhydrid und Mischungen hieraus.

Das zyklische Anhydrid ii) einer Dicarbonsäure kann in einer Ausführungsform auch Itaconsäure sein.

In einer Ausführungsform des erfindungsgemäßen Verfahrens ist das mindestens eine Alkylenoxid v) ausgewählt aus der Gruppe enthaltend Propylenoxid, Ethylenoxid, 1,2-Butylenoxid, 2,3-Butylenoxid, 1,2-Pentenoxid, Octen-1-oxid, Decen-1-oxid, Dodecen-1-oxid, Tetradecen-1-oxid, Hexadecen-1-oxid, Octadecen-1-oxid, Styroloxid, Cyclohexenoxid, Epoxypropylneododecanoat, Glycidol, Epichlorhydrin und Mischungen hieraus.

Bevorzugt ist das Alkylenoxid v) ausgewählt aus der Gruppe 1,2-Butylenoxid, Propylenoxid, Ethylenoxid.

Der Begriff "Fettsäureester" im Sinne der Komponente iiib) der vorliegenden Erfindung bezieht sich auf Mono-, Di-, Triester oder Polyester von Fettsäuren; die genannten Triester von Fettsäuren werden auch als Triglyceride bezeichnet. Triglyceride sind Hauptbestandteile von natürlichen Fetten oder Ölen, die sowohl pflanzlichen als auch tierischen Ursprungs sein können. Bei den Polyester von Fettsäuren handelt es sich im Sinne der Erfindung um mit Fettsäuren mehrfach veresterte Polyalkohole.

Somit ist der Fettsäureester iiib) ausgewählt aus der Gruppe enthaltend Fettsäuretriglyceride, Fettsäurealkylester ohne Hydroxyfunktionalitäten.

Der Fettsäureester iiib) ist ausgewählt aus der Gruppe enthaltend säureester, die keine Hydroxylgruppen enthalten.

In einer Ausführungsform der Erfindung ist der Fettsäureester iiib) ausgewählt aus der Gruppe enthaltend Kakaobutter, Kokosfett, Baumwollsaatöl, Erdnussöl, Haselnussöl, Walnussöl, Leinöl, Distelöl, Meerestierfett (Tran), Schweineschmalz, Rindertalg, Gänseschmalz, Butterfett, Sojaöl, Rapsöl, Olivenöl, Sonnenblumenöl, Palmöl, Traubenkernöl, schwarzem Kümmelöl, Kürbiskernöl, Maiskeimöl, Weizenkeimöl, Mandelöl, Pistazienöl, Aprikosenkernöl, Macadamianussöl, Avocadoöl, Sanddornöl, Sesamöl, Hanföl, Primelöl und Wildrosenöl.

In einer bevorzugten Ausführungsform ist der Fettsäureester iiib) ausgewählt aus der Gruppe enthaltend Tran, Talg, Sojaöl, Rapsöl, Olivenöl, Sonnenblumenöl, Palmöl, sowie Mischungen daraus

Bevorzugt ist der Fettsäureester iiib) in einer Ausführungsform ausgewählt aus der Gruppe Sojaöl, Palmöl, Rapsöl, Sonnenblumenöl, sättigte und/oder gesättigte C4-C22-Fettsäurealkylester wie beispielsweise Stearinsäurealkylester, Ölsäurealkylester, Linolsäurealkylester, Linolensäurealkylester oder Mischungen hieraus. Ganz besonders bevorzugt ist der Fettsäureester iiib) ausgewählt aus der Gruppe Sojaöl, Rapsöl, Sonnenblumenöl, Palmöl und Methyl- und/oder Ethylester der bevorzugt genannten Fettsäureester.

In einer Ausführungsform des erfindungsgemäßen Verfahrens ist die Verbindung iv) nicht vorhanden.

In einer weiteren Ausführungsform des erfindungsgemäßen Verfahrens ist mindestens eine Verbindung iv) vorhanden.

Dabei ist die Verbindung iv) bevorzugt ausgewählt aus der Gruppe enthaltend γ-Butyrolacton, δ-Valerolacton, ε-caprolacton, (R,R)-Lactid, (S,S)-Lactid, meso-Lactid, sowie Mischungen daraus; besonders bevorzugt ist als Verbindung iv) ε-caprolacton.

Der basische und/oder nucleophile Katalysator kann ausgewählt sein aus der Gruppe enthaltend tertiäre Amine.

Besonders bevorzugt ist der basische und/oder nucleophile Katalysator ausgewählt aus der Gruppe enthaltend Imidazol und Imidazolderivate, ganz besonders bevorzugt Imidazol.

In einer bevorzugten Ausführungsform ist der basische und/oder nucleophile Katalysator ausgewählt aus der Gruppe umfassend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, 7-Methyl-1,5,7-triazabicyclo[4.4.0]dec-5-en, 1,5-Diazobicylco[4.3.0]-non-5-en, 1,5-Diazabicylo[5.4.0]undec-7-en, bevorzugt Imidazol und Dimethylethanolamin (DMEOA).

Die genannten Katalysatoren können allein oder in beliebigen Mischungen zueinander eingesetzt werden.

Das Verfahren zur Herstellung der Polyetherester-Polyole wird vorzugsweise so ausgeführt, dass die Zerewitinoff-aktive Verbindung zusammen mit dem Dicarbonsäureanhydrid ii) sowie dem Fettsäureester iiib) und dem basischen Katalysator in einen Reaktor vorgelegt wird und das Alkylenoxid kontinuierlich in den Reaktor zudosiert wird. In einer weiteren Ausführungsform der Erfindung wird die Zerewitinoff-aktive Verbindung i) und/oder das Dicarbonsäureanhydrid ii) und/oder der Fettsäureester iiib) ebenfalls in den Reaktor zusammen mit dem Alkylenoxid kontinuierlich zudosiert. In einer weiteren Ausführungsform werden alle Komponenten gleichzeitig oder nacheinander während der Synthese zudosiert und das Reaktionsprodukt kontinuierlich entnommen, so dass der ganze Prozess vollkontinuierlich durchgeführt werden kann.

Die Umsetzung mit Alkylenoxid erfolgt üblicherweise bei Temperaturen im Bereich zwischen 80 und 200°C, vorzugsweise zwischen 100°C und 160°C, besonders bevorzugt zwischen 110°C und 140°C.

Wenn tertiäre Amine als Katalysatoren für die Umsetzung mit Alkylenoxiden verwendet werden, liegt die Katalysatorkonzentration bezogen auf die Masse des Endproduktes zwischen 50 - 5000 ppm, bevorzugt zwischen 100 und 1000 ppm, und der Katalysator muss nach der Umsetzung nicht aus dem Reaktionsprodukt entfernt werden.

In einer bevorzugten Ausführungsform ist die Zerewitinoff-aktive Verbindung i) ausgewählt aus der Gruppe Trimethylolpropan, Glycerin, Neopentylglykol, Bisphenol A und das zyklische Anhydrid einer Carbonsäure ii) ist ausgewählt aus der Gruppe der C18- und/oder C16-Alkenylbernsteinsäureanhydride und der Fettsäureester iiib) ist ausgewählt aus der Gruppe Sojaöl, Palmöl und das Alkylenoxid v) ist Propylenoxid und der basische und/oder nucleophile Katalysator ist ausgewählt aus der Gruppe Dimethylethanolamin (DMEOA) und Imidazol.

In einer weiteren bevorzugten Ausführungsform ist die Zerewitinoff-aktive Verbindung i) ausgewählt aus der Gruppe Ethylenglykol, Diethylenglykol, Propylenglykol, Dipropylenglykol, Glycerin und Trimethylolpropan und das zyklische Anhydrid einer Carbonsäure ii) ist Phthalsäureanhydrid und der Fettsäureester iiib) ist ausgewählt aus der Gruppe Sojaöl, Palmöl und Talg und das Alkylenoxid v) ist Propylenoxid oder Ethylenoxid oder Mischungen hieraus und der basische und/oder nucleophile Katalysator ist ausgewählt aus der Gruppe Dimethylethanolamin (DMEOA) und Imidazol.

Die erfindungsgemäßen Polyetherester-Polyole werden mittels Ringöffnungspolymerisation von Alkylenoxiden hergestellt. Sie sind Telechele und haben ein gut definiertes Molekulargewicht und Funktionalität. Die Funktionalität liegt in der Regel im Bereich zwischen 1-8, bevorzugt zwischen 2-6, besonders bevorzugt zwischen 2-4, bei OH-Zahlen im Bereich zwischen 20 und 1000 mg KOH/g, bevorzugt zwischen 20 und 800 mg KOH/g, besonders bevorzugt zwischen 100 und 600 mg KOH/g.

Die erfindungsgemäßen Polyetherester-Polyole enthalten je nach Verwendungszweck bevorzugt zwischen 5 Massen-% und 90 Massen-% von Fettsäuren iiia) und/oder Fettsäureester iiib) abgeleitete Einheiten, bevorzugt 5 bis 80 Massenprozent.

Die erfindungsgemäßen Polyetherester-Polyole enthalten je nach Verwendungszweck bevorzugt zwischen 5 Massen-% und 80 Massen-% von Verbindung ii) abgeleitete Einheiten.

Die verwendeten basischen und/ oder nucleophilen Katalysatoren können neben der Ringöffnungspolymerisation zusätzlich noch die Umesterung der anhydrid-funktionellen Moleküle katalysieren, wodurch einheitliche Reaktionsprodukte entstehen. Die Produkteigenschaften sind nicht mehr stark von Prozessparameter beeinflusst und die Produkte lassen sich besser reproduzieren.

Ein Vorteil des erfindungsgemäßen Verfahrens besteht darin, dass sich auch solche Verbindungen zu einem homogenen Reaktionsprodukt umsetzen lassen, die sich durch einen sehr großen Polaritätsunterschied auszeichnen und somit in reiner Form miteinander unverträglich sind. Durch die Umsetzung mit Alkylenoxid werden die miteinander unverträglichen Moleküle kompatibilisiert und es resultieren homogene Reaktionsprodukte, die sowohl Polyethereinheiten als auch Polyestereinheiten beinhalten. Bei der basenkatalysierten Alkoxilierung ist dies vermutlich auch, wie bereits erwähnt, darauf zurückzuführen, dass im Prozess neben der Ringöffnungspolymerisation zeitgleich Umesterungsreaktionen stattfinden, die die homogene Verteilung der estertragenden Molekülketten mit den ethertragenden Molekülketten gewährleistet.

Zudem bietet das erfindungsgemäß Verfahren der Vorteil, dass es bei niedrigeren Temperaturen durchgeführt werden kann als vergleichbare klassische Verfahren (und somit energiesparend ist), und dass es sowohl zeiteffizienter ist als auch eine höhere Ausbeute liefert.

Die Verwendungsmöglichkeit der erfindungsgemäßen Polyethesterole für Polyurethan (PU)-bauteile ist sehr vielfältig. Sie können beispielsweise in geschäumten oder in kompakten PU-Materialien wie beispielsweise in Verpackungsschaumstoffen, Weichschaumstoffen, Hartschaumstoffen, Halbhartschaumstoffen, Teppichbodenschaumstoffen, Integralschaumstoffen, Schuhsohlen, Kfz-Stoßfänger und andere Kfz-Außenteilen, Kunstleder, Beschichtungen, Klebstoffen, Dichtungsmaterialien oder in Elastomeren eingesetzt werden.

In dem Hydroxywertbereich, in dem die Polyole der Erfindung hergestellt können werden, sind diese Polyole, soweit sie im Polyurethansystem als Hauptpolyol verwendet werden, eher für härtere Polyurethane geeignet, so wie Hartschaum, Beschichtungen, Klebstoffe und Dichtungsmaterialien.

Hartschaumstoffe, wie oben erwähnt, können Polyurethan- und Polyisocyanuratschaumstoffe sein. Die Polyole der Erfindung weisen zusätzliche Vorteile auf, wenn Alkane, z.B. Pentan, als Treibmittel eingesetzt werden; der Einbau von hydrophoben ölbasierten Seitenketten durch die Verwendung von Triglyzeriden und Anhydriden, die eine hydrophobe Seitenkette enthalten, erhöht die Pentanverträglichkeit des Systems. Auch können aromatische Strukturen, z.B. durch Verwendung von Phthalsäureanhydrid, eingebaut werden, was die Brandwidrigkeit des Schaums erhöht.

Die Estergruppen, die durch Verwendung der Triglyzeride und Anhydride in der Synthese in den Polyolen eingeführt werden, werden auch zusätzlich die Brandwidrigkeit erhöhen. Somit sind die Polyole der Erfindung besonders gut geeignet für die Anwendungen im Hartschaumstoffbereich.

Im Bereich Beschichtungen, Klebstoffe und Dichtungsmaterialien führt der Einbau von hydrophoben ölbasierten Seitenketten und Anhydriden, die eine hydrophobe Seitenkette enthalten, zu einer erhöhten Hydrophobizität. Die erhöhte Hydrophobizität hat Vorteile sowohl in der Herstellung als auch in den Eigenschaften des Polyurethans. In der Herstellung des Polyurethans in obengenannten Anwendungen kann eine lange (offene) Verarbeitungszeit erwünscht sein. Eine erhöhte Hydrophobizität des Polyurethangemisches reduziert die Feuchtaufnahme während der Reaktion, wodurch das System eine längere Verarbeitungszeit bekommt und die Blasenbildung reduziert wird. In den Endeigenschaften des ausreagierten Polyurethans führt eine erhöhte Hydrophobizität zu einer erhöhten Wasserabweisung. So kann die Aufnahme von Wasser die Härte des Polyurethans und die Anbindung des Polyurethans an Substrate reduzieren. In Ummantelungen von elektronischen Bauteilen ist ebenfalls ein Polyurethan mit geringerer Wasseraufnahme erwünscht, weil die Aufnahme von Wasser zu einer Erhöhung der dielektrischen Konstante und Erniedrigung des spezifischen Durchgangswiderstands führt. Auch sind hydrophobe Polyurethane weniger anfällig für Hydrolyse und in Folge dessen werden die Eigenschaften des Polyurethans länger erhalten.

Die erfindungsgemäßen Polyole können für die Herstellung von Präpolymeren durch Umsetzung mit Diisocyanaten verwendet werden. Somit können die erfindungsgemäßen Polyole für die Herstellung von Polyurethanmaterialien neben der direkten Verwendung in der Polyol-Komponente der Formulierungen auch in Form eines Präpolymers verwendet werden. In diesem Zuge ist zu erwähnen, dass der Präpolymeranteil in der Präpolymer-Polyol-Mischung zwischen 10% bis 90% betragen kann. Diese Präpolymer-Polyol-Mischungen werden beispielsweise verwendet, wenn die erfindungsgemäßen Polyole in so genannten Einkomponentenfeuchtaushärtenden Systemen wie z. B. für Beschichtungs-, Klebe- und Dichtungsmaterialien eingesetzt werden.

Je nachdem, welche Einsatzstoffe eingesetzt werden, können Produkte für verschiedenste Anwendungsbereiche hergestellt werden. Sind beispielsweise Polyole für Polyurethan-Beschichtungen oder für Polyurethan-Hartschaumstoffe bereitzustellen, wird bevorzugt als Komponente ii) ein Alkenylbernsteinsäureanhydrid verwendet und als Komponente iiib) ein Fettsäuretriglycerid.

Für Polyisocyanurat-Polyurethan-Hartschaumstoffe ist Komponente ii) bevorzugt Phthalsäureanhydrid und Komponente iiib) bevorzugt Sojaöl oder Ölsäuremethylester.

Die nach dem erfindungsgemäßen Verfahren hergestellten Polyetherester-Polyole können aufgrund der hydrophoben Komponenten, die entweder über den Fettsäureester iiib) oder über die Anhydridkomponente ii) in das Produkt eingearbeitet werden können, die oben genannten Vorteile hydrophober Polyole im Polyurethan bieten. Wie bereits beispielhaft erwähnt, können durch Wahl der Art und Menge der Komponenten i), ii), iii), iv) und v) die Eigenschaften auf verschiedene Anwendungsbereiche eingestellt werden.

### Beispiele

Die folgenden Beispiele illustrieren einige Aspekte der vorliegenden Erfindung; sie sollen keineswegs den Umfang der Erfindung einschränken.

### Beispiel Polyetherester-Polyol A (nicht erfindungsgemäß)

405,5 g Trimethylolpropan, 3379,4 g Rizinusöl, 495,4 g Phthalsäureanhydrid sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 722,5 g Propylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 4855 g eines viskosen, einphasigen Polyetheresterols erhalten. Das Produkt wies folgende analytische Kennzahlen auf:

| | |
|---|---|
| Hydroxywert: 210 mgKOH/g | (DIN 53240) |
| Viskosität (bei 25°C): 2070 mPas | (DIN 51550) |
| Wassergehalt: 0,007 % | (DIN 51777) |
| Säurezahl: <0,01 mg KOH/g | (DIN 53402) |

### Beispiel Polyetherester-Polyol B (nicht erfindungsgemäß)

449,9 g Trimethylolpropan, 3752,5 g Rizinusöl, 509,9 g Pentasize 68 (C16/C18-Alkenylbernsteinsäureanhydrid der Firma Trigon GmbH) sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 290 g Propylenoxid innerhalb von 60 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 4951 g eines viskosen, einphasigen Polyetheresterols erhalten. Das Produkt wies folgende analytische Kennzahlen auf:

| | |
|---|---|
| Hydroxywert: 234 mgKOH/g | (DIN 53240) |
| Viskosität (bei 25°C): 1348 mPas | (DIN 51550) |
| Wassergehalt: 0,014 % | (DIN 51777) |
| Säurezahl: <0,054 mg KOH/g | (DIN 53402) |

### Beispiel Polyetherester-Polyol C (nicht erfindungsgemäß)

449,6 g Trimethylolpropan, 3746,3 g Rizinusöl, 250,0 g Glissopal SA (Poly(isobutylen)bernsteinsaäureanhydrid mit Molekulargweicht 1000 g/mol der Firma BASF SE) sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 799,2 g Propylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 4928,4 g eines viskosen, homogenen, leicht trüben Polyetheresterols erhalten. Das Produkt wies folgende analytische Kennzahlen auf:

| | |
|---|---|
| Hydroxywert: 225 mgKOH/g | (DIN 53240) |
| Viskosität (bei 25°C): 1071 mPas | (DIN 51550) |
| Wassergehalt: 0,014 % | (DIN 51777) |
| Säurezahl: 0,01 mg KOH/g | (DIN 53402) |

### Beispiel Polyetherester-Polyol D (nicht erfindungsgemäß)

449,6 g Trimethylolpropan, 3746,3 g Rizinusöl, 250,1 g Pentasize 8 (C16/C18-Alkenylbernsteinsäureanhydrid der Firma Trigon GmbH) sowie 1,53 g Imidazol und 0,053 g Ti(IV)-tert-butoxid wurden in einen Druckautoklaven vorgelegt und unter Rühren dreimal mit Stickstoff inertisiert. Anschließend wurde die Reaktionsmischung auf 120°C erwärmt und 801,1 g Propylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 5140 g eines viskosen, einphasigen Polyetheresterols erhalten. Das Produkt wies folgende analytische Kennzahlen auf:

| | |
|---|---|
| Hydroxywert: 225 mgKOH/g | (DIN 53240) |
| Viskosität (bei 25°C): 1031 mPas | (DIN 51550) |
| Wassergehalt: 0,01 % | (DIN 51777) |
| Säurezahl: 0,01 mg KOH/g | (DIN 53402) |

### Beispiel Polyetherester-Polyol E

1390,2 g Dipropylenglykol, 1751,8 g Phthalsäureanhydrid, 1004,2 g Sojaöl sowie 1,53 g Imidazol wurden in einen Druckautoklaven vorgelegt und unter Rühren dreimal mit Stickstoff inertisiert. Anschließend wurde die Reaktionsmischung auf 120°C erwärmt und 855,8 g Ethylenoxid innerhalb von 120 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden 4914 g eines viskosen, einphasigen Polyetheresterols erhalten. Das Produkt wies folgende analytische Kennzahlen auf:

| | |
|---|---|
| Hydroxywert: 241,3 gKOH/g | (DIN 53240) |
| Viskosität (bei 25°C): 1724 mPas | (DIN 51550) |
| Wassergehalt: 0,036 % | (DIN 51777) |
| Säurezahl: 0,01 mg KOH/g | (DIN 53402) |

### Beispiel Polyetherester-Polyol F

1101,0 g Diethylenglykol, 1749,5 g Phthalsäureanhydrid, 1000,2 g Sojaöl sowie 1,5 g Imidazol wurden in einen Druckautoklaven vorgelegt und unter Rühren dreimal mit Stickstoff inertisiert. Anschließend wurde die Reaktionsmischung auf 120°C erwärmt und 1150,6 g Propylenoxid innerhalb von 180 Minuten zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden 4940 g eines viskosen, einphasigen Polyetheresterols erhalten. Das Produkt wies folgende analytische Kennzahlen auf:

| | |
|---|---|
| Hydroxywert: 238 mgKOH/g | (DIN 53240) |
| Viskosität (bei 25°C): 1784 mPas | (DIN 51550) |
| Wassergehalt: 0,016 % | (DIN 51777) |
| Säurezahl: 0,01 mg KOH/g | (DIN 53402) |

### Beispiel Polyetherester-Polyol G (nicht erfindungsgemäß)

1108,9 g Saccharose, 336,3 g Glycerin, 233,9 g Rizinusöl, 19,06 g Wasser, 100 g Pentasize 68 (C16/C18-Alkenylbernsteinsäureanhydrid der Firma Trigon GmbH) sowie 5,0 g Imidazol wurden in einen Druckautoklaven vorgelegt und unter Rühren dreimal mit Stickstoff inertisiert. Anschließend wurde die Reaktionsmischung auf 130°C erwärmt und 3306,3 g Propylenoxid innerhalb von 7 Stunden zudosiert. Nach beendeter Monomerdosierung und nach Erreichen eines konstanten Reaktordruckes wurden flüchtige Bestandteile sodann im Vakuum für ca. 30 Minuten unter Stickstoff-Strippung abdestilliert und anschließend das Produkt abgelassen. Es wurden so 5014 g eines viskosen, einphasigen Polyetheresterols erhalten. Das Produkt wies folgende analytische Kennzahlen auf:

| | |
|---|---|
| Hydroxywert: 414 mgKOH/g | (DIN 53240) |
| Viskosität (bei 25°C): 14206 mPas | (DIN 51550) |
| Wassergehalt: 0,022 % | (DIN 51777) |
| Säurezahl: 0,04 mg KOH/g | (DIN 53402) |

Anhand dieser Beispiele wird deutlich, dass die erfindungsgemäßen Polyetherester-Polyole durch ein einfaches Verfahren erhältlich sind und das Verfahren zu einheitlichen und homogenen Reaktionsprodukten für einen breiten Anwendungsbereich führt.

### Anwendungsbeispiele 1-2: Beschichtungsanwendungen.

### (Nicht erfindungsgemäße Answendungen)

- Antifoam MSA: Entschäumer von der Firma Dow Corning
- Jeffcat TD-33 A: Triethylendiamin in Dipropylenglykol mit einer OH Zahl: 560 mg KOH/g der Firma Huntsman
- Zeolitpaste: Molekularsieb in Rizinusöl der Firma Uop
- Isocyanat: Polymer-MDI (Lupranat^{®}) M20S der BASF SE

### Plattenherstellung für die mechanische Prüfung

Die Reaktionskomponenten und Additive werden bei Raumtemperatur gelagert und verarbeitet. Die Polyol-Komponente (Komponente A, siehe Tabellen) wird angesetzt und für zwei Minuten in einem Speedmixer^{®} vermischt. Anschließend wird diese für mindestens 30Minuten stehen gelassen. Die Menge des zugegebenen Isocyanats wird so berechnet, dass der Isocyanat-Index 115,9 beträgt. Die A Komponente wird mit dem Isocyanat für 60 s im Speedmixer^{®} verrührt. Das Gemisch wird in eine offene Form mit der Abmessung 30 x 20 x 0,2 cm³ ausgegossen und glatt gezogen. Die entstehende Platte bleibt für eine Stunde in der Form, bevor sie herausgenommen wird. Anschließend werden die Platten für zwei Stunden bei 80 °C getempert. Am nächsten Tag werden geeignete Prüfkörper zur Bestimmung der mechanischen Eigenschaften entnommen.

### Quelltest:

Aus der 2 mm-Platte wird ein Stück mit den Maßen 4 x 4 cm² herausgeschnitten und die Masse bestimmt (m1). Anschließend wird die Probe in einen mit Wasser gefüllten 6 L Eimer gelegt, der für 5 Stunden in einem auf 100 °C geheiztem Heizschrank verbleibt. Um das Auftreiben der Proben zu verhindern, werden diese in ein Metallgestell eingespannt. Nachdem die Proben herausgenommen, mit Zellstoff leicht abgetrocknet und auf Raumtemperatur abgekühlt wurden, wird die Masse (m2) bestimmt und daraus der Quellgrad in Prozent berechnet mittels [(m2-m1) / m1) x 100 %)]. Der Messfehler liegt unter 0,1 %. Unterschiede bei den Messwerten von 0,2 % sind signifikant.

### Anwendungsbeispiel 1 und 2 (nicht erfindungsgemäß)

| ***Index*** | ***Isocyanat* 115,9** | | | **Lupranat M 20 S** |
|---|---|---|---|---|
| Beispiel | | 1 | 2 | |
| Zeolitpaste | Teile | 6,95 | 6,95 | |
| Antifoam MSA | Teile | 0,05 | 0,05 | |
| Jeffcat TD-33 A | Teile | 0,3 | 0,25 | |
| Polyol C | Teile | 93 | | |
| Polyol D | Teile | | 93 | |
| Lupranat M 20 S | MV | 100/60.2 | 100/59.6 | |
| 2 mm Platte | | | | Bestimmung nach |
| Weiterreißwiderstand | N/mm | 59,2 | 63,5 | DIN ISO 34-1, B (b) |
| Zugfestigkeit | MPa | 25 | 26,4 | DIN EN ISO 527 |
| Reißdehnung | % | 50 | 51 | DIN EN ISO 527 |
| E-Modul | MPa | 467,3 | 384,4 | DIN EN ISO 527 |
| Härte | Shore D | 72 | 71 | DIN 53505 |
| Quellgrad | % an Platte | 0,59 | 0,58 | |

### MV beschreibt das Mischverhalten von A zu B Komponente.

Anwendungsbeispiel 3-4: Hartschaumanwendungen.
- TCPP: Flammschutzmittel (Tri 2-chlorisopropylphosphat)
- PEG 600: Polyethylenglykol mit Mw: 600 g/mol
- Tegostab B 8443: Stabilisator der Firma GE Bayer Silicones
- Texacat ZF 22: Bis-(2-dimethylaminoethyl)ether in Dipropylenglykol mit einer OH Zahl: 250 mg KOH/g der Firma Huntsman.
- Dabco K 2097: Kaliumacetat basierter Katalysator mit einer OH Zahl: 740 mg KOH/g der Firma Air Products
- n-Pentan: physikalisches Treibmittel der Firma Haltermann
- Leitungswasser:
- Isocyanat: Polymer-MDI (Lupranat®) M20R der BASF SE

### Schaumherstellung für die mechanische Prüfung

Als Basisschaumsystem wird ein teils Wasser - teils Pentangetriebenes Polyisocyanuratsystem genommen. Ein Kaliumacetat basierter Katalysator wird genommen für die Ausbildung der Isocyanuratgruppen. Die Menge an Pentan und Wasser werden so bemessen, dass der Schaum eine freigeschäumte Dichte von ca 31 kg/m³ hatte; die Menge an Katalysatoren wird so bemessen, dass der Schaum eine Gelzeit von ca. 50 Sekunden hatte. Die Reaktionskomponenten und Additive werden bei Raumtemperatur gelagert und verarbeitet. Die Polyol-Komponente wird angesetzt und im Handansatz mit einem Laborrührer verrührt. Die A-Komponenten werden für eine halbe Stunde stehen gelassen, so dass die meisten Luftblasen in der Mischung entweichen können. Die Menge des zugegebenen Isocyanats wird so berechnet, dass der Isocyanat-Index 225 beträgt. Die A-Komponente wird mit dem Isocyanat für sechs Sekunden im Handansatz mit einem Laborrührer verrührt. Das Gemisch wird mit einer, auf die freigeschäumte Dichte bezogene, zehn prozentige Überpackung in eine 11 L Metallwürfelform gegossen und diese verschlossen. Nach einer halben Stunde wird der Würfelschaum aus der Form genommen. Die Schaumproben werden 3 Tage bei Raumtemperatur gelagert und dann in Prüfkörper für die mechanischen Prüfungen zersägt.

| Beispiel | | 3 | 4 | |
|---|---|---|---|---|
| TCPP | Teile | 13,0 | 13,0 | |
| PEG 600 | Teile | 6,0 | 6,0 | |
| Tegostab B 8443 | Teile | 2,0 | 2,0 | |
| Leitungswasser | Teile | 2,1 | 2,1 | |
| Polyol E | Teile | 78,5 | | |
| Polyol F | Teile | | 78,5 | |
| Texacat ZF 22 | Teile | 2,1 | 2,1 | |
| Dabco K 2097 | Teile | 1,6 | 1,6 | |
| n-Pentan | Teile | 13,5 | 13,5 | |
| | | | | |
| Bechertest | | | | |
| Startzeit | s | 11 | 11 | |
| Fadenziehzeit | s | 45 | 51 | |
| Steigzeit | s | 77 | 81 | |
| Rohdichte | kg/m³ | 31,3 | 32 | |
| | | | | |
| Würfel | | | | Bestimmung nach DIN Norm |
| Raumgewicht Kern | kg/m³ | 30,1 | 32,5 | DIN 53421/DIN EN ISO 604 |
| Geschlossenzelligkeit | % | 90 | 87 | DIN ISO 4590 |
| Druckfestigkeit | N/mm^2 | 0,21 | 0,21 | DIN 53421/DIN EN ISO 604 |
| Biegefestigkeit/-sp. | N/mm² | 0,27 | 0,21 | DIN 53423 |
| Durchbiegung | mm | 7,8 | 9,0 | DIN 53423 |
| Dimensionelle Stabi- | | | | DIN ISO 2796 |
| litätsprüfung (-30°C) | | | | |
| Längenänderung | % | -0,2 | -0,2 | |
| Breitenänderung | % | -0,1 | 0,1 | |
| Höhenänderung | % | 0,0 | 0,1 | |
| Dimensionelle Stabi- | | | | DIN ISO 2796 |
| litätsprüfung (80°C) | | | | |
| Längenänderung | % | 0,0 | -0,3 | |
| Breitenänderung | % | 0,3 | -0,9 | |
| Höhenänderung | % | -0,8 | 0 | |

Die Anwendungsbeispiele 3 und 4 zeigen, dass mit den erfinderischen Polyolen Hartschäume hergestellt werden können mit typischen Hartschaumrohdichten und physikalischen Eigenschaften.

## Patentansprüche

1. Verfahren zur Herstellung eines Polyetherester-Polyols, wobei ein Gemisch (A) aus mindestens einer Zerewitinoff-aktiven Verbindung i), mindestens einer Verbindung ii), ausgewählt aus der Gruppe enthaltend zyklische Anhydride von Dicarbonsäuren, mindestens einem Fettsäureester iiib) sowie optional mindestens einer Verbindung iv), ausgewählt aus der Gruppe enthaltend zyklische Mono- und Diester, mit Hilfe eines nucleophilen und/oder basischen Katalysators mit mindestens einem Alkylenoxid v) zur Reaktion gebracht wird, wobei die mindestens eine Zerewitinoff-aktive Verbindung i) ausgewählt ist aus der Gruppe der hydroxy- und/oder aminofunktionellen Verbindungen mit einer Funktionalität im Bereich zwischen 1 und 8, und wobei der Fettsäureester iiib) ausgewählt ist aus der Gruppe enthaltend Fettsäureester, die keine Hydroxylgruppen enthalten, und Mischungen daraus, wobei der nucleophile und/oder basische Katalysator ausgewählt ist aus der Gruppe enthaltend tertiäre Amine.

2. Verfahren gemäß Anspruch 1, wobei das Gemisch (A) zusammen mit dem nucleophilen und/oder basischen Katalysator vor Zugabe des mindestens einen Alkylenoxids v) im Reaktionsgefäß vorgelegt wird.

3. Verfahren gemäß einem der Ansprüche 1 bis 2, wobei das zyklische Anhydrid ii) einer Dicarbonsäure ausgewählt ist aus der Gruppe enthaltend a) Alkenylbernsteinsäureanhydride, b) Phthalsäureanhydrid, c) Maleinsäureanhydrid, d) Bernsteinsäureanhydrid sowie e) Tetrahydrophthalsäureanhydrid, sowie Mischungen daraus.

4. Verfahren gemäß Anspruch 3, wobei das mindestens eine Alkenylbernsteinsäureanhydrid a) ausgewählt ist aus der Gruppe enthaltend C18- und/oder C16-Alkenylbernsteinsäureanhydride, Poly(isobutylen)bernsteinsäureanhydrid und Mischungen hieraus.

5. Verfahren gemäß einem der Ansprüche 1 bis 4, wobei das mindestens eine Alkylenoxid v) ausgewählt ist aus der Gruppe enthaltend Propylenoxid, Ethylenoxid, 1,2-Butylenoxid, 2,3-Butylenoxid, 1,2-Pentenoxid, Octen-1-oxid, Decen-1-oxid, Dodecen-1-oxid, Tetradecen-1-oxid, Hexadecen-1-oxid, Octadecen-1-oxid, Styroloxid, Cyclohexenoxid, Glycidol, Epichlorhydrin und Mischungen hieraus, bevorzugt Propylenoxid, Ethylenoxid und Butylenoxid und Mischungen daraus.

6. Verfahren gemäß einem der Ansprüche 1 bis 5, wobei der Fettsäureester iiib) ausgewählt ist aus der Gruppe enthaltend Tran, Talg, , Sojaöl, Rapsöl, Olivenöl, Sonnenblumenöl, sowie Mischungen daraus.

7. Verfahren gemäß einem der Ansprüche 1 bis 6, wobei die Verbindung iv) nicht vorhanden ist.

8. Verfahren gemäß einem der Ansprüche 1 bis 6, wobei mindestens eine Verbindung iv) vorhanden ist.

9. Verfahren gemäß Anspruch 8, wobei mindestens eine Verbindung iv) ausgewählt ist aus der Gruppe enthaltend γ-Butyrolacton, δ-Valerolacton, ε-Caprolacton, (R,R)-Lactid, (S,S)-Lactid, meso-Lactid, sowie Mischungen daraus.

10. Verfahren gemäß Anspruch 8, wobei die Verbindung iv) ε-Caprolacton ist.

11. Verfahren gemäß einem der Ansprüche 1 bis 10, wobei der basische Katalysator ausgewählt ist aus der Gruppe enthaltend Imidazol sowie Imidazolderivate, bevorzugt Imidazol.

12. Verfahren gemäß einem der Ansprüche 1 bis 11, wobei das Polyetherester-Polyol eine Hydroxyzahl im Bereich zwischen 20 und 1000 mg KOH/g, bevorzugt 100 bis 600 mg KOH/g, aufweist

13. Verfahren gemäß einem der Ansprüche 1 bis 12, wobei das Polyetherester-Polyol zwischen 5% und 90 Gew.% von Fettsäureester iiib) abgeleitete Einheiten enthält.

14. Verfahren gemäß einem der Ansprüche 1 bis 13, wobei das Polyetherester-Polyol zwischen 5% und 80 Gew.% von Verbindung ii) abgeleitete Einheiten enthält.

15. Verfahren gemäß einem der Ansprüche 1 bis 14, wobei die Umsetzung mit Alkylenoxid v) bei Temperaturen im Bereich zwischen 80° und 200° C erfolgt.

16. Verfahren gemäß einem der Ansprüche 1 bis 15, wobei das Verfahren als Semi-Batch-Verfahren oder als kontinuierliches Verfahren durchgeführt wird.

17. Polyetherester-Polyol, herstellbar nach dem Verfahren eines der Ansprüche 1 bis 16.

18. Verwendung eines Polyetherester-Polyols, herstellbar nach dem Verfahren eines der Ansprüche 1 bis 16, zur Herstellung von geschäumten und/oder kompakten Polyurethanen durch Reaktion mit einem Di- oder Polyisocyanat.

19. Verwendung eines Polyetherester-Polyols, herstellbar nach dem Verfahren eines der Ansprüche 1 bis 16, zur Herstellung von Polyisocyanurat-Schäumen.

20. Verwendung eines Polyetherester-Polyols, herstellbar nach dem Verfahren eines der Ansprüche 1 bis 16, zur Herstellung von kompakten Polyurethanen aus dem Bereich Beschichtungen oder Klebstoffe.

## Claims

1. The process for preparing a polyetherester polyol by reacting a mixture (A) comprising at least one Zerevitinov-active compound i), at least one compound ii), selected from the group comprising cyclic anhydrides of dicarboxylic acids, at least one fatty acid ester iiib) and also optionally at least one compound iv), selected from the group comprising cyclic mono-and diesters, with at least one alkylene oxide v) by means of a nucleophilic and/or basic catalyst, wherein the at least one Zerevitinov-active compound i) is selected from the group of hydroxyl- and/or aminofunctional compounds having a functionality in the range between 1 and 8, and wherein said fatty acid ester iiib) is selected from the group comprising fatty acid esters comprising no hydroxyl groups, and mixtures thereof, wherein the nucleophilic and/or basic catalyst is selected from the group comprising tertiary amines.

2. The process according to claim 1 wherein said mixture (A) is initially charged to the reaction vessel together with the nucleophilic and/or basic catalyst before the at least one alkylene oxide v) is added.

3. The process according to either of claims 1 and 2 wherein said cyclic anhydride ii) of a dicarboxylic acid is selected from the group comprising a) alkenylsuccinic anhydrides, b) phthalic anhydride, c) maleic anhydride, d) succinic anhydride and e) tetrahydrophthalic anhydride, and also mixtures thereof.

4. The process according to claim 3 wherein the at least one alkenylsuccinic anhydride a) is selected from the group comprising C18- and/or C16-alkenylsuccinic anhydrides, poly(isobutylene)succinic anhydride and mixtures thereof.

5. The process according to any of claims 1 to 4 wherein the at least one alkylene oxide v) is selected from the group comprising propylene oxide, ethylene oxide, 1,2-butylene oxide, 2,3-butylene oxide, 1,2-pentene oxide, 1-octene oxide, 1-decene oxide, 1-dodecene oxide, 1-tetradecene oxide, 1-hexadecene oxide, 1-octadecene oxide, styrene oxide, cyclohexene oxide, glycidol, epichlorohydrin and mixtures thereof, preferably propylene oxide, ethylene oxide and butylene oxide and mixtures thereof.

6. The process according to any of claims 1 to 5 wherein said fatty acid ester iiib) is selected from the group comprising train oil, tallow, soya oil, rapeseed oil, olive oil, sunflower seed oil and mixtures thereof.

7. The process according to any of claims 1 to 6 wherein said compound iv) is not present.

8. The process according to any of claims 1 to 6 wherein at least one compound iv) is present.

9. The process according to claim 8 wherein at least one compound iv) is selected from the group comprising γ-butyrolactone, δ-valerolactone, ε-caprolactone, (R,R)-lactide, (S,S)-lactide, meso-lactide and also mixtures thereof.

10. The process according to claim 8 wherein said compound iv) is ε-caprolactone.

11. The process according to any of claims 1 to 10 wherein the basic catalyst is selected from the group comprising imidazole and imidazole derivatives, preferably imidazole.

12. The process according to any of claims 1 to 11, wherein the polyetherester polyol has a hydroxyl number in the range between 20 and 1000 mgKOH/g, preferably in the range from 100 to 600 mgKOH/g.

13. The process according to any of claims 1 to 12 wherein the polyetherester polyol comprises between 5% and 90 wt% of units derived from fatty acid ester iiib).

14. The process according to any of claims 1 to 13 wherein the polyetherester polylol comprises between 5% and 80 wt% of units derived from compound ii).

15. The process according to any of claims 1 to 14 wherein the reaction with alkylene oxide v) is carried out at temperatures in the range between 80° and 200°C.

16. The process according to any of claims 1 to 15 conducted as a semi-batch process or as a continuous process.

17. A polyetherester polyol obtainable by the process of any of claims 1 to 16.

18. The use of a polyetherester polyol obtainable by the process of any of claims 1 to 16 for production of foamed and/or compact polyurethanes by reaction with a di- or polyisocyanate.

19. The use of a polyetherester polyol obtainable by the process of any of claims 1 to 16 for production of polyisocyanurate foams.

20. The use of a polyetherester polyol obtainable by the process of any of claims 1 to 16 for production of compact polyurethanes from the sector of coatings or adhesives.

## Revendications

1. Procédé de fabrication d'un polyétherester-polyol, selon lequel un mélange (A) d'au moins un composé i) actif selon Zerewitinoff, d'au moins un composé ii), choisi dans le groupe contenant les anhydrides cycliques d'acides dicarboxyliques, d'au moins un ester d'acide gras iiib), ainsi qu'éventuellement d'au moins un composé iv), choisi dans le groupe contenant les mono- et diesters cycliques, est mis en réaction à l'aide d'un catalyseur nucléophile et/ou basique avec au moins un oxyde d'alkylène v), ledit au moins un composé i) actif selon Zerewitinoff étant choisi dans le groupe des composés à fonction hydroxy et/ou amino ayant une fonctionnalité dans la plage comprise entre 1 et 8, et l'ester d'acide gras iiib) étant choisi dans le groupe contenant les esters d'acides gras qui ne contiennent pas de groupes hydroxyle, et leurs mélanges, le catalyseur nucléophile et/ou basique étant choisi dans le groupe contenant les amines tertiaires.

2. Procédé selon la revendication 1, selon lequel le mélange (A) est chargé dans le récipient de réaction conjointement avec le catalyseur nucléophile et/ou basique avant l'ajout dudit au moins un oxyde d'alkylène v).

3. Procédé selon l'une quelconque des revendications 1 à 2, selon lequel l'anhydride cyclique ii) d'un acide dicarboxylique est choisi dans le groupe contenant a) les anhydrides d'acide alcénylsuccinique, b) l'anhydride de l'acide phtalique, c) l'anhydride de l'acide maléique, d) l'anhydride de l'acide succinique et e) l'anhydride de l'acide tétrahydrophtalique, ainsi que leurs mélanges.

4. Procédé selon la revendication 3, selon lequel ledit au moins un anhydride d'acide alcénylsuccinique a) est choisi dans le groupe contenant les anhydrides d'acide alcénylsuccinique en C18 et/ou C16, l'anhydride de l'acide poly(isobutylène)succinique et leurs mélanges.

5. Procédé selon l'une quelconque des revendications 1 à 4, selon lequel ledit au moins un oxyde d'alkylène v) est choisi dans le groupe contenant l'oxyde de propylène, l'oxyde d'éthylène, l'oxyde de 1,2-butylène, l'oxyde de 2,3-butylène, l'oxyde de 1,2-pentène, l'oxyde d'octène-1, l'oxyde de décène-1, l'oxyde de dodécène-1, l'oxyde de tétradécène-1, l'oxyde d'hexadécène-1, l'oxyde d'octadécène-1, l'oxyde de styrène, l'oxyde de cyclohexène, le glycidol, l'épichlorhydrine et leurs mélanges, de préférence l'oxyde de propylène, l'oxyde d'éthylène et l'oxyde de butylène et leurs mélanges.

6. Procédé selon l'une quelconque des revendications 1 à 5, selon lequel l'ester d'acide gras iiib) est choisi dans le groupe contenant l'huile de poisson, le suif, l'huile de soja, l'huile de colza, l'huile d'olive, l'huile de tournesol et leurs mélanges.

7. Procédé selon l'une quelconque des revendications 1 à 6, selon lequel le composé iv) n'est pas présent.

8. Procédé selon l'une quelconque des revendications 1 à 6, selon lequel au moins un composé iv) est présent.

9. Procédé selon la revendication 8, dans lequel au moins un composé iv) est choisi dans le groupe contenant la γ-butyrolactone, la δ-valérolactone, l'ε-caprolactone, le (R,R)-lactide, le (S,S)-lactide, le méso-lactide et leurs mélanges.

10. Procédé selon la revendication 8, selon lequel le composé iv) est l'ε-caprolactone.

11. Procédé selon l'une quelconque des revendications 1 à 10, selon lequel le catalyseur basique est choisi dans le groupe contenant l'imidazole et les dérivés d'imidazole, de préférence l'imidazole.

12. Procédé selon l'une quelconque des revendications 1 à 11, selon lequel le polyétherester-polyol présente un indice hydroxyle dans la plage comprise entre 20 et 1 000 mg KOH/g, de préférence de 100 à 600 mg KOH/g.

13. Procédé selon l'une quelconque des revendications 1 à 12, selon lequel le polyétherester-polyol contient entre 5 % et 90 % en poids d'unités dérivées de l'ester d'acide gras iiib).

14. Procédé selon l'une quelconque des revendications 1 à 13, selon lequel le polyétherester-polyol contient entre 5 % et 80 % en poids d'unités dérivées du composé ii).

15. Procédé selon l'une quelconque des revendications 1 à 14, selon lequel la réaction avec l'oxyde d'alkylène v) a lieu à des températures dans la plage comprise entre 80 et 200 °C.

16. Procédé selon l'une quelconque des revendications 1 à 15, selon lequel le procédé est réalisé sous la forme d'un procédé semi-discontinu ou d'un procédé continu.

17. Polyétherester-polyol, pouvant être fabriqué par le procédé selon l'une quelconque des revendications 1 à 16.

18. Utilisation d'un polyétherester-polyol, pouvant être fabriqué par le procédé selon l'une quelconque des revendications 1 à 16, pour la fabrication de polyuréthanes moussés et/ou compacts par réaction avec un di- ou polyisocyanate.

19. Utilisation d'un polyétherester-polyol, pouvant être fabriqué par le procédé selon l'une quelconque des revendications 1 à 16, pour la fabrication de mousses de polyisocyanurate.

20. Utilisation d'un polyétherester-polyol, pouvant être fabriqué par le procédé selon l'une quelconque des revendications 1 à 16, pour la fabrication de polyuréthanes compacts du domaine des revêtements ou des adhésifs.
